# EUROPÄISCHE PATENTSCHRIFT

(11) **EP 2 328 807 B1**
(45) Veröffentlichungstag und Bekanntmachung des Hinweises auf die Patenterteilung: **01.02.2017**
(21) Anmeldenummer: 09783089.7
(22) Anmeldetag: 16.09.2009
(51) Int. Cl.: B64D 11/00

(54) **LASTPFADOPTIMIERTE SCHWENKBARE GEPÄCKABLAGE (HATRACK)**
LOAD PATH-OPTIMIZED PIVOTABLE HATRACK
COFFRE À BAGAGES, DIT « PORTE-CHAPEAUX »,OPTIMISÉ POUR LA MISE EN CHARGE

(30) Priorität: 30.09.2008 DE 102008049639; 30.09.2008 US 194717 P
(43) Veröffentlichungstag der Anmeldung: 08.06.2011
(73) Patentinhaber: Airbus Operations GmbH, 21129 Hamburg (DE)
(72) Erfinder: VINE, Paul, 20255 Hamburg (DE); SCHNEIDER, Uwe, 21635 Jork (DE); EHLERS, Bernd, 20144 Hamburg (DE)
(74) Vertreter: Kopf Westenberger Wachenhausen Patentanwälte PartG mbB
(86) Internationale Anmeldenummer: PCT/EP2009/062015
(87) Internationale Veröffentlichungsnummer: WO 2010/037637

(56) Entgegenhaltungen:
- WO-A1-2006/087183
- WO-A1-2008/022688
- DE-U1- 20 120 481
- US-A1- 2008 078 871
- US-B1- 6 536 710

## Beschreibung

Die Erfindung betrifft eine Vorrichtung zur Aufnahme von Gepäck, die eine auch als Hatrack bezeichnete Gepäckablage bildet. Diese insbesondere für Passagierkabinen in Flugzeugen bestimmte Gepäckablage ist oberhalb von Passagiersitzreihen des Flugzeugs beweglich angeordnet. Von der vorliegenden Erfindung sind allerdings auch Gepäckablagen in anderen Transportmitteln betroffen, wie beispielsweise schienengebundene Fahrzeuge, vorzugsweise Hochgeschwindigkeitszüge oder Autobusse oder der Schifffahrt.

### Stand der Technik

In Passagierflugzeugen werden in den Kabinen über den Sitzreihen Verstaufächer bereitgestellt zur Aufbewahrung des Handgepäcks von Passagieren während des Fluges. Eine der jeweiligen Sitzposition entsprechend angepasste gute Erreichbarkeit und Bedienbarkeit dieser als Gepäckablagen, Hatracks, Fixed, moving- Bins oder Overhead Stowage Compartments (OHSC) bezeichneten Verstaufächer ist ein wichtiges Merkmal für das Wohlbefinden der Passagiere in einem Flugzeug. Der Aufbau dieser Gepäckablagen umfasst häufig ein starres Gehäuse mit einem fixierten Boden sowie eine nach oben zu öffnende Klappe. Diesen Ausführungsformen ist gemeinsam, dass ein Verstauen und die Entnahme von Gepäckstücken beschwerlich ist, aufgrund beengter räumlicher Verhältnisse und der begrenzten Zugänglichkeit der Gepäckablage durch die vergleichsweise hohe Positionierung. Insbesondere für kleine Personen besteht daher die Schwierigkeit, das Gepäck zu entnehmen. Überkopf-Gepäckablagen in Flugzeugen sind insbesondere während der Start- und Lande-Phase sowie bei Notfällen sehr hohen mechanischen Belastungen ausgesetzt und müssen daher für die Luftfahrt verbindliche Sicherheitsstandards hinsichtlich der Dauerfestigkeit und des Crash-Verhaltens erfüllen.

Bekannte herkömmliche Lösungen besitzen eine weitestgehend lastferne Anbindung an die Flugzeugstruktur, insbesondere über Zug- oder Spannstäbe (Tie-Rods) und benötigen zum Öffnen und zum Schließen der Gepäckablage vielfach ein Kraftunterstützungssystem. Weiterhin fehlt bei bisherigen Overhead Stowage Compartments (OHSC) eine in das Kabinen-Lining integrierte Anmutung.

Aus der US 4 275 942 A ist eine als Schale gestaltete Gepäckablage bekannt, die aus einer geschlossenen Staustellung bzw. Ruheposition in eine offene Beladeposition ausschwenkbar ist. Die Zugangsöffnung für die Passagiere ergibt sich dabei aus einer Höhendifferenz zwischen einer unteren Gehäusekante und der Vorderkante der Gepäckablage in der abgesenkten Position. Nachteilig hat sich dabei erwiesen, dass diese Gepäckablage bis in den Kopfbereich der Passagiere in Sitzposition schwenkt.

Die WO 2007/048916 A betrifft eine Überkopf-Gepäckablage für Flugzeuge, die zur Gepäckaufnahme ein weitestgehend rechteckförmiges Gehäuse einschließt. Das in einer Transportstellung schräg geneigt angeordnete, zu den Passagiersitzreihen zeigend ein konvex gestaltetes Kabinenwandelement einschließende Gehäuse ist um einen außermittigen Drehpunkt in eine Belade- bzw. Entladeposition schwenkbar. In der geschlossenen Position bzw. der Transportstellung erfordert diese Gepäckablage eine wirksame Verriegelung des Gehäuses zum Schutz der Passagiere vor herunterfallenden Gepäckstücken. Zum Schließen der Gepäckablage ist aufgrund des außermittig angeordneten Gehäusedrehpunktes ein relativ hoher Kraftaufwand erforderlich.

Die Überkopf-Gepäckablage für Flugzeuge gemäß der WO 2008/012427 A ist in der Transportstellung ebenfalls schräg geneigt angeordnet und an der Unterseite einstückig mit einem Kabinenwandelement versehen. In der Belade- bzw. Entladeposition wird die Gepäckablage in Richtung des Passagiers um einen außermittig positionierten Drehpunkt geschwenkt. Synchron dazu wird ein der Gepäckablage nebengeordnetes Kabinenwandelement nach oben geschwenkt, um einen ungehinderten Zugang der Gepäckablage zu ermöglichen. Dieser Gepäckablagen-Aufbau beansprucht einen relativ großen Kabinenwandbereich. Für die einzelnen, getrennt zueinander beweglichen Kabinenwandelemente ist eine komplexe Kinematik erforderlich, die eine regelmäßige Wartung, wie ein Nachjustieren erfordert, zur Vermeidung voneinander abweichender Spaltmaße zwischen den Kabinenwandelementen.

WO 2006/087183 A1 beschreibt ein Gepäckfach für ein Luftfahrzeug, welches nach dem Öffnen einer Klappe um eine Achse, die sich entfernt vom Schwerpunkt des Gepäckfachs befindet, verkippt werden kann.

DE 201 20 481 U1 beschreibt ein Gepäckfach für Land-, Wasser- und Luftfahrzeuge, welches als Gepäckwippe ausgebildet ist, die in der Art eines zweiarmigen Hebels schwenkbar in der horizontalen Schwenkachse gelagert ist. Dazu ist eine in Deckennähe des Fahrzeuges längs der horizontalen Schwenkachse schwenkbar gelagerte Klappe vorgesehen, die ein Staufach verschließt. Die Gepäckwippe besteht aus einer Vorderwand, die den einen Hebelteil des zweiarmigen Hebels bildet, und der andere Teil des zweiarmigen Hebels ist mindestens aus der Bodenwand und der Rückwand gebildet. Zwischen einem fahrzeugfesten Innenwandprofil und dem schwenkbaren Teil der Gepäckwippe ist mindestens eine Gasdruckfeder angeordnet. Die Schwenkachse für die Gepäckwippe ist an der Vorderseite eines Verlängerungsprofils angeordnet, das in Richtung zur Fahrzeugmitte verlängert ist; z.B. ist die Schwenkachse aus einer etwa halboffenen, halbrunden Aufnahme am Verlängerungsprofil ausgebildet, in die ein gleichprofiliertes Hakenprofil der Gepäckwippe schwenkbar eingreift.

### Aufgabenstellung

Es ist Aufgabe der vorliegenden Erfindung, eine gattungsgemäße Gepäckablage weiterzubilden, um die Zugänglichkeit der Gepäckablage in der Beladeposition und Entladeposition zu verbessern und eine sichere Gepäckaufbewahrung in der Transportposition sowie eine optische Integration in das Kabinen-Lining zu gewährleisten.

Diese Problemstellung wird durch die Vorrichtung gemäß Anspruch 1 gelöst.

Durch das erfindungsgemäße Konzept kann eine nahezu ebene Beladungsfläche realisiert werden, was die Ablage von Gepäckstücken in und die Entnahme von Gepäckstücken aus dem Gehäuse der Gepäckablage vereinfacht. In der Belade- und Entladeposition der erfindungsgemäßen Gepäckablage stellt sich eine nahezu horizontale Lage des Gehäusebodens ein, die in Verbindung mit einer ergonomisch günstigen geringen

Höhe eine optimale Nutzung der Gepäckablage ermöglicht, ohne Beeinträchtigung von Passagieren auf den Sitzreihen.

Durch die Erfindung stellt sich verbesserte Ergonomie im Hinblick auf die Erreichbarkeit der Ladekante ein, um mit minimalen Handkräften das Beladen und Entladen der Gepäckablage zu ermöglichen. Durch einen bewusst positionierten Drehpunkt der Gepäckablage entsteht eine wippenähnliche Konstruktion, die das Öffnen und Schließen der Gepäckablage erheblich vereinfacht. Der vorteilhaft schwerpunktnahe Drehpunkt begünstigt eine Schwenkbewegung des Gehäuses mit minimalen Handkräften von der Belade- oder Entladeposition in eine Transportposition sowie ein umgekehrtes Schwenken, unabhängig von dem Ladezustand des Gehäuses, wodurch sich ein hoher Bedienungskomfort der Gepäckablage einstellt. Dazu erfordert eine Verstellung der Gepäckablage weder ein Kraftunterstützungssystem noch aufwendige oder komplexe Kinematiken. Das erfindungsgemäße Konzept sieht vor, in dem Boden des Gehäuses im Bereich eines Schwerpunktzentrums eine lastpfadoptimierte Drehachse anzuordnen, die an beiden Stirnseiten des Gehäuses über Haltemittel an einer flugzeugfesten Struktur, beispielsweise an Spanten oder Stringern im Bereich des Flugzeugrumpfs befestigt ist. Durch die erfindungsgemäße Gepäckablage wird einerseits die Bewegungsfreiheit der Passagiere nicht eingeschränkt, andererseits kann eine bequeme Ablage von Gepäck in und Entnahme aus der Gepäckablage sichergestellt werden.

Insbesondere ist das Hatrackmodul zur Anbindung an ein Schienensystem geeignet, indem es die auftretenden Gepäcklasten über ein stabiles Tragwerk entlang der Lastpfade linienförmig entlang der Flugrichtung in die Struktur überführt.

Aufgrund der tragenden Struktur des Bodens kann mit dem erfindungsgemäßen Konzept eine gewichtsoptimierte Gepäckablage und gleichzeitig eine verbesserte Versagenssicherheit im Crashfall realisiert werden. Vorteilhaft erfordert dieser Aufbau keine separaten Verstärkungen zur Stützung des Gehäuses. Die gewichtsoptimierte, als ein Leichtbauelement konzipierte Gepäckablage reduziert den Anteil der tragenden Struktur des Gehäuses auf den Lastpfad des Bodens. Dieser Aufbau verhindert gleichfalls ein fertigungsbedingtes oder beladebedingtes Durchbiegen des Gehäusebodens. Die geforderten Lasten (crash loads) dimensionieren nicht mehr das gesamte Gehäuse, sondern beschränken sich auf die tragende Struktur des Bodens, dessen Dimensionierung ein Lastweg bzw. ein Lastpfad definiert. Vorteilhaft führt die Last nicht über die Seitenwände, sondern direkt von der Drehachslagerung über dem Gehäuse zugeordnete Haltemittel in die flugzeugfeste Struktur. Die sich durch das erfindungsgemäße Konzept einstellende erhöhte Steifigkeit des Gehäuses sowie dessen Befestigung an der Flugzeugrumpfstruktur schaffen eine durchbiegefreie, einen geringen Bauteileumfang aufweisende Gepäckablage in einer gewichts- und kraftoptimierten Bauweise.

Die eine optimale Funktionalität, eine hohe Stabilität und Funktionssicherheit, keinen Wartungsaufwand erfordernde, kompakt gestaltete, im Flugzeugrumpf integrierte erfindungsgemäße Gepäckablage ist vorteilhaft kostengünstig darstellbar. Die Gepäckablage erfüllt bei ausreichendem Gepäckvolumen alle zuvor genannten Aufgaben sowie weiterhin die Sicherheitsvorschriften, die u.a. auch für Extrembelastungen einen Schutz der Passagiere vor herunterfallenden Gepäckstücken vorsehen. Vorteilhaft bietet das erfindungsgemäße Konzept auch die Möglichkeit, eine Gepäckablage mit einer airlinespezifischen Anpassung der Ladehöhe zu realisieren.

Nach einer weiteren vorteilhaften Ausgestaltung der erfindungsgemäßen Vorrichtung bildet das Gehäuse der Gepäckablage einen bis auf eine Zugangsöffnung geschlossenen Gepäckaufnahmeraum, mit einem weitestgehend halbkreisförmigen bzw. halbmondartigen Querschnittsprofil. Zur Schaffung einer bauteiloptimierten Lösung erfordert das Gehäuse der erfindungsgemäßen Gepäckablage keine separate Abdeckklappe.

Die halbkreisförmige Formgebung der Gepäckablage gestattet eine Rotation nahe an der Flugzeugstruktur, wobei die lastnahe Anbindung an die Flugzeugstruktur möglichst in Verbindung mit einem Schienenbefestigungssystem erfolgt.

Ein wichtiger Aspekt der Erfindung ist darin zu sehen, dass das Gehäuse der oberhalb der Passagier-Sitzreihen angeordneten Gepäckablage von einer offenen, weitestgehend horizontalen Beladeposition ausgehend, in eine gekippte (beispielsweise nahezu vertikale), die Gepäckablage schließende Transportstellung oder Staustellung schwenkbar ist. Durch ein Verschwenken des Gehäuses in die Transportposition gelangt das Gepäck über einen eine Schütte bildenden Bodenabschnitt in einen Gehäusebereich, in dem das Gepäck sicher verbleibt. Ein weiterer Vorteil der erfindungsgemäßen Lösung liegt darin, dass die Formgebung der erfindungsgemäßen Gepäckablage im geschlossenen Zustand einen "nahtlosen" Übergang und damit eine optimale Integration in das Kabinen-Lining ermöglicht. Die Gepäckablage ist somit vollständig in einem Zwischenraum des Flugzeugsrumpfes und optisch in das Kabinen-Lining (continuous Lining) der Flugzeug-Passagierkabine integriert.

Dadurch stellt sich ein einheitlicher optischer Gesamteindruck der Deckenverkleidung und/oder der Wandverkleidung der Passagierkabine ein. Vorteilhaft wird durch die Gepäckablage in der geschlossenen, nahezu vertikalen Position ein für die Gepäckablage bestimmter Ausschnitt in der Kabinenverkleidung von einem Bodenbereich des Gehäuses vollständig ausgeglichen. In der verschwenkten Position unterbindet dieser Bodenbereich gleichzeitig den Zugang zu dem Gehäuseinnenraum. Im geschlossenen Zustand der Gepäckablage ist damit eine
einfache Anpassung an die Kabinen-Seitenwand sowie die Kabinen-Decke möglich, wobei sich gleichzeitig für das Erscheinungsbild der Kabine vorteilhafte enge Spaltmaße einstellen. Weiterhin bilden sich nachteilig keine optisch sichtbaren offenen Bereiche zwischen benachbarten Gepäckablagen, von denen beispielsweise eine geschlossen und die weitere geöffnet ist. Die Gestaltung von dem bei geschlossener Gepäckablage sichtbaren Bodenbereich des Gehäuses kann von der Gestaltung und / oder Farbgebung her der benachbarten Kabinenverkleidung angepasst oder abweichend ausgeführt werden. Entsprechend den Kundenwünschen bietet es sich an, diesen Bodenbereich des Gehäuses als ein dekoratives Element zu gestalten, welches beispielsweise kundenspezifisch auf ein standardisiertes Gehäuse des Gepäckfachs aufgesetzt wird, ohne dass eine aufwändige Neuzertifizierung erforderlich ist.

Für die erfindungsgemäße Gepäckablage ist in dem Zwischenraum des Flugzeugrumpfs außerdem ein mit dem Gehäuse zusammenwirkendes Abdeckungselement integriert. Das Gehäuse ist an dem lagefixierten Abdeckungselement geführt, welches dazu eine konkave Innenkontur bildet, die mit der konvexen Außenkontur des Gehäuses korrespondiert. In der geschlossenen Position der Gepäckablage wird durch das Abdeckungselement zumindest die Zugangsöffnung des Gehäuses vollständig abgedeckt. Die in der Gepäckablage befindlichen Gepäckstücke sind dadurch auch in extremen Flugsituationen sicher aufgehoben.

Gemäß einer weiteren vorteilhaften Ausführungsform der vorliegenden Erfindung ist eine einfache Haltemittel umfassende Anbindung der Gepäckablage an die Flugzeugstruktur vorgesehen. Als geeignetes, mit der flugzeugfesten Struktur verbundene Haltemittel ist beispielsweise ein Systemträger, Bügel oder ein Housing eingesetzt, das einen steifen Außenrahmen aufweist, an dem die als tragendes Element bzw. Längsträger ausgeführte Drehachse des Gehäuses angelenkt ist.

Als Werkstoff für den Außenrahmen eignet sich insbesondere Aluminium oder ein faserverstärkter Kunststoff. Gemäß einer bevorzugten Ausführung wird vorgeschlagen, zur Bildung des Außenrahmens zwei um ca. 90 Grad zueinander versetzte, U-förmig gestaltete Bügel vorzusehen, die zu einem geschlossenen Tragwerk verbunden sind. Weiterhin bietet es sich an, das Tragwerk im Bereich beider Stirnseiten des Gehäuses zu einer Baueinheit so zusammenzuführen, dass diese gleichzeitig eine Aufnahme bzw. Drehlager für die Drehachse des Gehäuses bilden.

Zur Befestigung des Gesamtmoduls an der flugzeugfesten Struktur wie den Spanten, Stringern oder sonstigen tragenden Elementen des Flugzeugrumpfes ist gemäß einer weiteren vorteilhaften Ausführungsform der Erfindung eine form- und/oder kraftschlüssige Schnappverbindung vorgesehen. Bevorzugt ist diese lösbare Verbindung als ein Snap and Klick Verschluss ausgeführt.

Das Gehäuse der Gepäckablage weist zur Bildung eines Längsträgers bzw. eines tragenden Elementes ein Metallrohr oder ein hochfestes Kunststoffrohr auf, das gleichzeitig die Funktion einer Drehachse übernimmt. Dieser rohrförmige, jeweils endseitig in dem Außenrahmen gelagerte Längsträger bildet eine durchbiegresistente, gewichts- und kraftoptimierte Bauweise des schwenkbar angeordneten Gehäuses der Gepäckablage.

Zur Realisierung einer Leichtbau-Gepäckablage ist zumindest das lastpfadfreie Gehäuse der Gepäckablage aus Kunststoff oder Sandwich-Wabenplatten hergestellt. Zur gezielten Versteifung bietet es sich an, für die lastführenden Querschnitte im Gehäuseboden und den Seitenflächen einen Aufbau vorzusehen, der Decklagen aus einem Verbundwerkstoff, wie GFK (glasfaserverstärkter Kunststoff) oder CFK (kohlenstofffaserverstärkter Kunststoff), vorsieht, zwischen denen ein Wabenkern eingebracht ist.

Ein wichtiger Aspekt der Erfindung ist darin zu sehen, dass in der geschlossenen Position bzw. der Transportstellung die Gepäckablage gesichert ist. Dazu bietet sich bevorzugt ein Verschlussriegel an, der an einer oder an beiden Stirnseiten des Gehäuses positioniert vorteilhaft mit einem Nocken oder einem alternativ ausgeführten Haltemittel des Außenrahmens oder deren Bügel zusammenwirkt. Zur Betätigung bzw. Freigabe des Verschlussriegels bzw. der Verschlussriegel eignet sich insbesondere eine bodenseitig des Gehäuses angeordnete, leicht zu bedienende Entriegelung. Der bevorzugt auf das Gehäuse aufgesetzte, z.B. aufgeklebte, genietete oder aufgeschraubte Verschlussriegel kann erfindungsgemäß durch ein Abdeckelement bedeckt werden, wodurch dieses nach außen hin abgeschirmt ist, zur Erzielung einer verbesserten Sicherheit gegenüber den Passagieren. Das Abdeckelement kann ergänzend zu einer Schutzfunktion gleichzeitig als dekoratives Element ausgeführt werden, welches kundenspezifisch auf ein standardisiertes Gepäckfach aufgesetzt wird. Da das Abdeckelement von einer tragenden Funktion frei ist, kann es nahezu in jeder gewünschten Form kostengünstig hergestellt werden. Das Verkleidungsteil bzw. Abdeckelement der Verschlussriegel stellt eine kostengünstige Möglichkeit dar, unterschiedliche Varianten der Kabinengestaltung zu verwirklichen. Durch die Änderung bzw. Anpassung dieses in der Wahrnehmung der Passagiere visuell wichtigen Bauteils kann der Kabineneindruck bzw. eine Kabinenwirkung mit einem seriell hergestellten Zusatzteil beeinflusst werden.

Für die erfindungsgemäße Gepäckablage ist weiterhin vorgesehen, dass diese individuell in Flugrichtung bezüglich der Passagiersitzreihen fixiert werden kann. Vorteilhaft ist dazu die Gepäckablage in einem der flugzeugfesten Struktur zugeordneten Schienensystem eingebracht, das zwei parallel verlaufende Schienen umfasst. Die Anbindung erfolgt beispielsweise über formschlüssig in die Schienen eingreifende Befestigungselemente des Außenrahmens, die vor einer Lagefixierung ein individuelles Positionieren der Gepäckablage in dem Schienensystem ermöglichen.

Ein weiterer wichtiger Aspekt der Erfindung sieht vor, die Gepäckablage als einen modularen Baustein der Innenausstattung des Flugzeugs zu gestalten, der typenübergreifend für mehrere Rumpfquerschnittsgrößen von Flugzeugen eingesetzt werden kann. Durch eine Modulbauweise kann die erfindungsgemäße Gepäckablage somit für unterschiedliche Flugzeuge verwendet werden. Die Modulbauweise ermöglicht vorteilhaft eine Gepäckablagen-Herstellung in größeren Stückzahlen, mit der Folge reduzierter Stückkosten.

Gemäß einer weiteren Ausführungsform der vorliegenden Erfindung ist die erfindungsgemäße Vorrichtung zur Aufnahme von Gepäck für ein Flugzeug bestimmt, die oberhalb einer Passagiersitzreihe angeordnet ist. Die eine Gepäckablage bildende Vorrichtung umfasst ein einteilig gestaltetes Gehäuse, das lastpfadoptimiert über eine schwerpunktnahe, einem Boden zugeordnete Drehachse in Verbindung mit separaten Haltemitteln an einer flugzeugfesten Struktur befestigt ist. Das Gehäuse der Gepäckablage ist von einer offenen Beladeposition ausgehend in eine geschlossene Transport- oder Staustellung schwenkbar. Dabei verlagert sich das in dem Gehäuse abgelegte Gepäck über einen eine Schütte bildenden Bodenabschnitt in einen Bereich des Gehäuses, der einer Zugangsöffnung gegenüberliegt. Im geschlossenen Zustand ist die Gepäckablage in einem Flugzeugrumpf integriert, wobei ein Bodenabschnitt des Gehäuses einen für die Gepäckablage bestimmten Ausschnitt in der Kabinenverkleidung übergangsfrei ausgleicht, zur Darstellung eines einheitlichen Kabinen-Linings.

Gemäß einem weiteren Ausführungsbeispiels der Erfindung ist die Vorrichtung lastpfadoptimiert konstruiert und / oder mit einer Kraftunterstützung (elektrisch, mechanisch, pneumatisch, hydraulisch, etc.) ausgestattet, um den Öffnungs- und / oder Schließvorgang zu unterstützen.

### Kurze Beschreibung der Ausführungsbeispiele

Im Folgenden werden mit Hinweis auf die beigefügten Figuren vorteilhafte Ausführungsbeispiele der vorliegenden Erfindung beschrieben. Es zeigen:
- Figur 1,: einen Ausschnitt einer Passagierkabine eines Flugzeugs;
- Figur 1a,: eine perspektivische Darstellung der Passagierkabine;
- Figur 2,: eine erfindungsgemäß gestaltete Gepäckablage in einer Perspektive;
- Figur 3,: ein Gehäuse der Gepäckablage als Einzelteil in einer Schnittansicht;
- Figur 4,: einen Ausschnitt eines Flugzeugrumpfes mit geöffneter Gepäckablage;
- Figur 5,: einen Ausschnitt eines Flugzeugrumpfes mit geschlossener Gepäckablage.

### Detaillierte Beschreibung der Ausführungsbeispiele

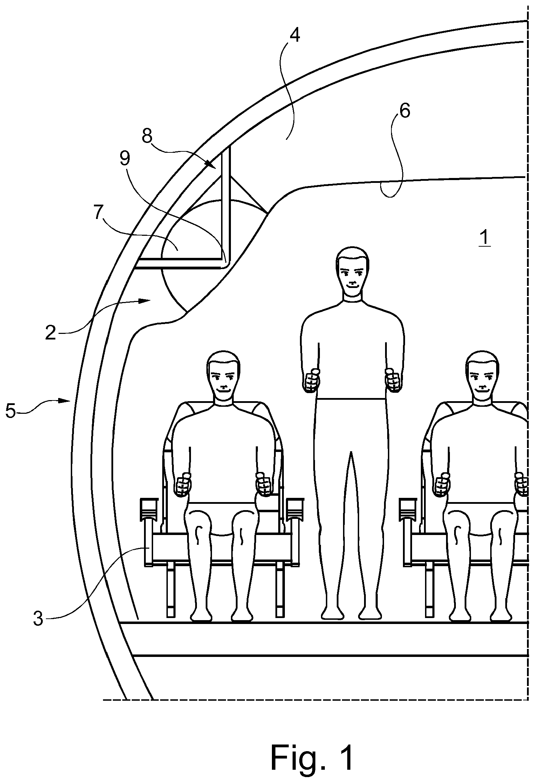

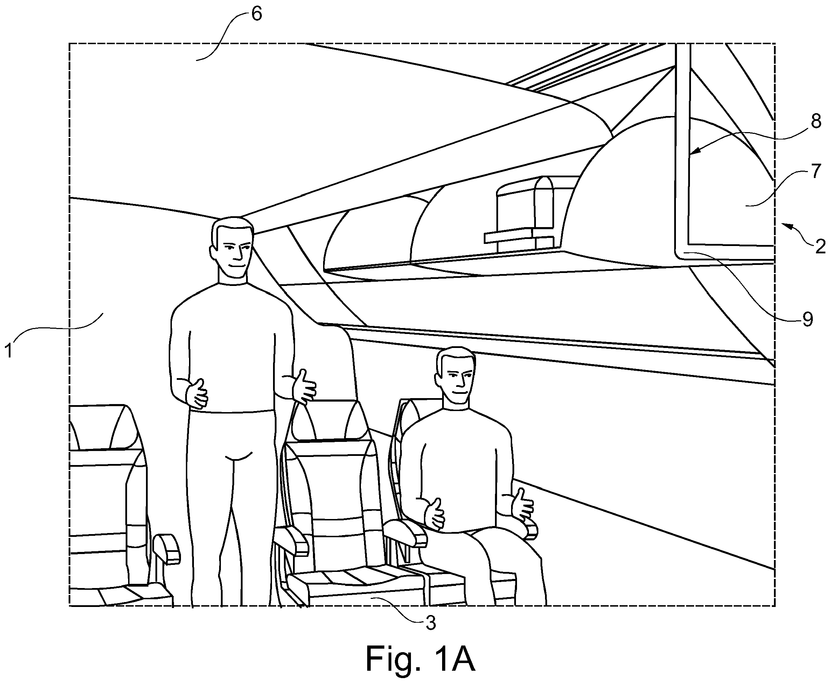

In der folgenden Beschreibung der Figuren 1 bis 5 werden für übereinstimmende oder sich entsprechende Bauteile und Elemente zumindest teilweise gleiche Bezugsziffern verwendet.

Die Figuren 1 und 1a zeigen einen Ausschnitt einer Passagierkabine 1 eines Flugzeugs und verdeutlichen dabei insbesondere die Anordnung einer Gepäckablage 2 für die Passagiere oberhalb einer äußeren Sitzreihe 3. Die Gepäckablage 2 ist in Figur 1 in der geschlossenen Position abgebildet, wobei ein Gehäuse 7 der Gepäckablage 2 vollständig in einem Zwischenraum 4 eines Flugzeugsrumpfs 5 und gleichzeitig in einer inneren Kabinenwand, einem Kabinen-Lining 6 integriert ist. Das um eine Drehachse 9 schwenkbare Gehäuse 7 ist über einen Außenrahmen 8 an einer flugzeugfesten Struktur des Flugzeugrumpfs 5 befestigt. Aufgrund einer weitestgehend mit der Augenhöhe eines Passagiers übereinstimmenden Positionierung der Gepäckablage 2 ergibt sich eine einfache Ablage und Entnahme des Gepäcks. Außerdem ist ein ausreichender Abstand zwischen der Gepäckablage 2 und sitzenden Passagieren gewährleistet, so dass auch eine geöffnete Gepäckablage 2 die Passagiere nicht nachteilig beeinträchtigt.

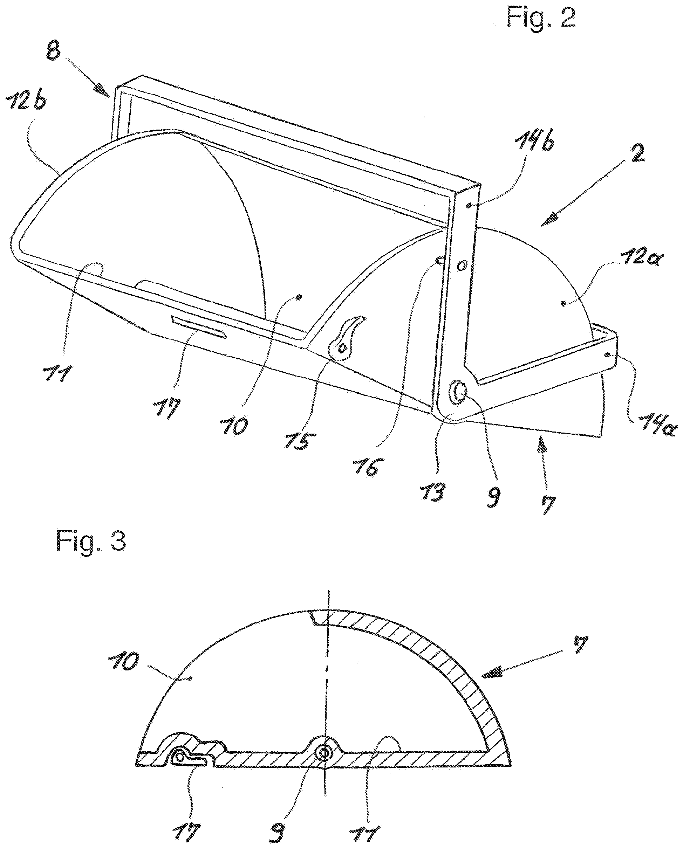

In den Figuren 2 und 3 ist die Gepäckablage 2 beziehungsweise ein Einzelteil der Gepäckablage 2 dargestellt. Die in Figur 2 in einer Perspektive abgebildete Gepäckablage 2 schließt das Gehäuse 7 sowie den Außenrahmen 8 ein. Das um eine Drehachse 9 schwenkbar angeordnete Gehäuse 7 bildet einen bis auf eine Zugangsöffnung 10 geschlossenen Raum mit einem weitestgehend halbmondartigen bzw. halbkreisförmigen Profil. Die Drehachse 9 wird bevorzugt durch ein Metallrohr gebildet, das schwerpunktnah und lastpfadoptimiert einem Boden 11 des Gehäuses 7 zugeordnet ist. An beiden Stirnseiten 12a, 12b des Gehäuses 7 greift die Drehachse 9 in eine als Lagerung ausgebildete Aufnahme 13 ein. Der Außenrahmen 8 ist zusammengesetzt aus zwei weitestgehend rechtwinklig zueinander angeordneten Bügeln 14a, 14b, die zur Bildung einer Baueinheit im Bereich der Aufnahme 13 einstückig zusammengefügt sind. Zur Fixierung des Gehäuses 7 in einer annähernd vertikalen, einer Transportposition entsprechenden Lage der Gepäckablage 2 weist das Gehäuse 7 an zumindest einer Stirnseite 12a einen Verschlussriegel 15 auf, der in einer Endlage mit einem Halter 16 des Bügels 14b zusammenwirkt. Mittels einer bodenseitigen Entriegelung 17 kann eine Freigabe des Verschlussriegels 16 erfolgen.

Die Figur 3 verdeutlicht den weitestgehend halbmondartigen bzw. halbkreisförmigen Querschnitt des Gehäuses 7 sowie die Größe der Zugangsöffnung 10. Die Größe der Zugangsöffnung 10 ist in einer vorteilhaften Ausgestaltung derart ausgelegt, dass Standardgepäckstücke als Handgepäck für den Transport in einer Flugzeugkabine aufgenommen werden können. Weiterhin zeigt die Figur 3 die mittig des Bodens 11 und damit schwerpunktnah positionierte Drehachse 9. Diese Drehachsenlage erfordert zum Verschwenken des Gehäuses 7 minimale Handkräfte, unabhängig vom Lastzustand der Gepäckablage 2. Ein Lösen des Verschlussriegels 15 erfolgt über die an dem Boden 11 positionierte Entriegelung 17, die zur Vermeidung eines Überstandes in einer entsprechenden Ausnehmung so angeordnet, dass sich eine bündige ebene Bodenfläche einstellt.

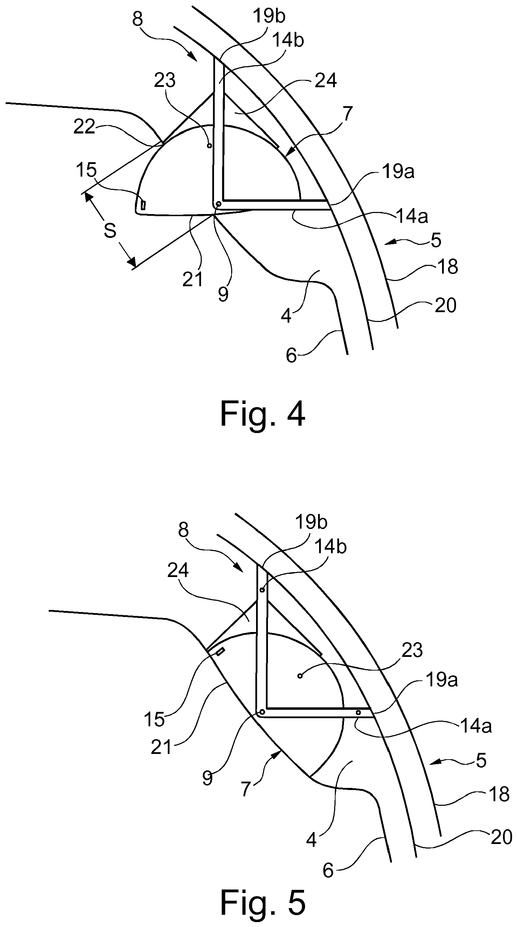

Die Figuren 4 und 5 zeigen einen Ausschnitt des Flugzeugrumpfs 5 mit zugeordneter Gepäckablage 2, die in einer Transportposition in dem zwischen einer Außenhaut 18 und dem Kabinen-Lining 6 begrenzten Zwischenraum 4 integriert ist. Die Befestigung der Gepäckablage 2 erfolgt über den Außenrahmen 8, wobei dessen Bügel 14a, 14b bevorzugt mittels kraftschlüssig und oder formschlüssig wirkender Verschlüsse 19a, 19b an einer flugzeugfesten Struktur 20, beispielsweise Spanten oder Stringer des Flugzeugrumpfs 5 lösbar befestigt ist. Zur individuellen Einstellung der Gepäckablage 1 weist die flugzeugfeste Struktur 19 vorteilhaft in Längsrichtung des Flugzeugs verlaufende Schienen auf, beispielsweise mit integrierten Befestigungselementen, an denen die Bügel 14a, 14b des Außenrahmens 8 über die Verschlüsse 19a, 19b befestigt sind. Das Gehäuse 7 ist in Figur 4 in der Beladeposition bzw. Entladeposition dargestellt. Ein Verschwenken des Gehäuses 7 in die Transportposition gemäß Figur 5, bewirkt ein Verlagern der aufgenommenen Gepäckstücke in den nach unten gerichteten muldenartigen Bereich des Gehäuses 7. In dieser Lage ist ein Bodenbereich 21 des Gehäuses 7 einer Kontur der benachbarten Kabinenwandung bündig angepasst und damit die Gepäckablage 2 in der Transportstellung übergangslos in das Kabinen-Lining 6 integriert. Entsprechend ist ein Maß "S" eines Ausschnitts 22 in dem Kabinen-Lining 6 an die Abmessung des Bodenbereichs 21 angepasst. Zum Öffnen der Gepäckablage 2 und zur Entnahme von Gepäckstücken aus dem Gehäuse 2 erfolgt zunächst eine Freigabe des Verschlussriegels 15 über die Entriegelung 17, die gleichzeitig einen ergonomisch gestalteten Griff bildet, um das Gehäuse 7 in die Entladeposition zu verschwenken. Zur Schaffung einer stabilen Belade- bzw. Entladeposition wird das Gehäuse 2 mittels eines elastischen Nockens 23 fixiert, der mit dem Bügel 14b zusammenwirkt. Innerhalb des Zwischenraums 4 ist ein mit der Gepäckablage 2 zusammenwirkendes Abdeckungselement 24 eingebracht, das eine konkave Innenkontur aufweist, die mit der konvexen Außenkontur des Gehäuses 7 korrespondiert. Die Auslegung und Anordnung des Abdeckungselementes 24 erfolgt so, dass dieses in der geschlossenen

Position der Gepäckablage 2 sich zumindest über den Bereich der Zugangsöffnung 10 erstreckt und so die Gepäckstücke im Gehäuse 7 einschließt.

Ergänzend sei darauf hingewiesen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen sind nicht als Einschränkung anzusehen.

### Bezugszeichenliste

- 1: Passagierkabine
- 2: Gepäckablage
- 3: Sitzreihe
- 4: Zwischenraum
- 5: Flugzeugrumpf
- 6: Kabinen-Lining
- 7: Gehäuse
- 8: Außenrahmen
- 9: Drehachse
- 10: Zugangsöffnung
- 11: Boden
- 12a: Stirnseite
- 12b: Stirnseite
- 13: Aufnahme
- 14a: Bügel
- 14b: Bügel
- 15: Verschlussriegel
- 16: Halter
- 17: Entriegelung
- 18: Außenhaut
- 19a: Verschluss
- 19b: Verschluss
- 20: Struktur
- 21: Bodenbereich
- 22: Ausschnitt
- 23: Nocken
- 24: Abdeckungselement

## Patentansprüche

1. Vorrichtung zur Aufnahme von Gepäck, die eine Gepäckablage (2) bildet und Haltemittel aufweist, wobei die Gepäckablage (2) als Gepäckaufnahmeraum ein Gehäuse (7) mit einer Zugangsöffnung (10) umfasst, das von einer gekippten, die Gepäckablage schließenden Transportposition in eine offene, weitestgehend horizontale Beladeposition schwenkbar ist und das Gehäuse (7) eine schwerpunktnahe, in einem Boden (11) angeordnete Drehachse (9) aufweist, wobei die Drehachse (9) an beiden Stirnseiten (12a, 12b) des Gehäuses (7) über das Haltemittel mit einer flugzeugfesten Struktur (20) im Bereich eines Flugzeugrumpfes (5) verbindbar ist; wobei als Haltemittel für das Gehäuse (7) der Gepäckablage (2) ein Systemträger vorgesehen ist, bestehend aus einem Außenrahmen (8), der zwei zueinander versetzte, U-förmig gestaltete Bügel (14a, 14b) umfasst, die zumindest an beiden Stirnseiten (12a, 12b) des Gehäuses (7) zur Bildung einer Baueinheit über eine Aufnahme (13) zusammengefügt sind, die gemeinsam mit der Drehachse (9) des Gehäuses (7) ein Drehlager bilden.

2. Vorrichtung nach Anspruch 1, **dadurch gekennzeichnet, dass** das einteilig gestaltete, ein halbkreisförmiges Querschnittsprofil aufweisende Gehäuse (7) der Gepäckablage (2) einen bis auf die Zugangsöffnung (10) geschlossenen Gepäckaufnahmeraum bildet.

3. Vorrichtung nach einem der Ansprüche 1 oder 2, **dadurch gekennzeichnet, dass** das Gehäuse (7) der Gepäckablage (2) von der offenen, horizontalen Lage ausgehend, in eine vertikale Lage schwenkbar ist, wobei sich das Gepäck über einen eine Schütte bildenden Abschnitt des Bodens (11) in einen der Zugangsöffnung (10) gegenüberliegenden Bereich des Gehäuses (7) verlagert.

4. Vorrichtung nach einem der vorhergehenden Ansprüche, **dadurch gekennzeichnet, dass** jeder Bügel (14a, 14b) des Außenrahmens (8) über eine formschlüssige und / oder kraftschlüssige Schnappverbindung lösbar mit der flugzeugfesten Struktur (20) im Bereich des Flugzeugrumpfs (5) verbindbar ist.

5. Vorrichtung nach einem der Ansprüche 1 bis 4, **dadurch gekennzeichnet, dass** zur Bildung der Drehachse (9) dem Boden (11) des Gehäuses (7) schwerpunktnah als Längsträger ein Metallrohr oder ein hochfestes Kunststoffrohr zugeordnet ist.

6. Vorrichtung nach einem der Ansprüche 1 bis 5, **dadurch gekennzeichnet, dass** zumindest das Gehäuse (7) der Gepäckablage (2) aus einem Verbundwerkstoff, insbesondere aus GFK - glasfaserverstärkter Kunststoff - oder CFK - kohlenstofffaserverstärkter Kunststoff - hergestellt ist und der Aufbau des Bodens (11) des Gehäuses (7) einzelne Decklagen aus einem Verbundwerkstoff umfasst, zwischen denen ein Wabenkern eingebracht ist.

7. Vorrichtung nach einem der Ansprüche 1 bis 6, **dadurch gekennzeichnet, dass** in der geschlossenen Stellung der Gepäckablage (2) die Position des Gehäuses (7) mit zumindest einem fremdgesteuerten oder selbsttätig wirkenden Verschlussriegel (15) gesichert ist, der mittels einer bodenseitig des Gehäuses (7) angeordneten Entriegelung (17) betätigt werden kann.

8. Vorrichtung nach einem der Ansprüche 1 bis 7, **dadurch gekennzeichnet, dass** in der flugzeugfesten Struktur (20) des Flugzeugrumpfs (5) ein Schienensystem vorzusehen ist, über das die Gepäckablage (2) verschiebbar geführt und individuell bezüglich einer Passagiersitzreihe fixiert werden kann.

9. Vorrichtung nach einem der Ansprüche 1 bis 8, welche mit einer Kraftunterstützung ausgestattet ist, um einen Öffnungs- und / oder einen Schließvorgang zu unterstützen.

10. Flugzeug mit einer Vorrichtung nach einem der Ansprüche 1 bis 9.

11. Flugzeug nach Anspruch 10, **dadurch gekennzeichnet, dass** die Gepäckablage (2) in der geschlossenen Position vollständig in einem Zwischenraum (4) des Flugzeugrumpfes (5) integriert und optisch in ein Kabinen-Lining (6) der Passagierkabine (1) eingefügt ist, wobei ein Bodenbereich (21) des Gehäuses (7) einen für die Gepäckablage (2) bestimmten Ausschnitt (22) im Kabinen-Lining (6) vollständig ausgleicht und der Bodenbereich (21) bei geschlossener Gepäckablage (2) der Formgebung und / oder der Farbgebung von dem Kabinen-Lining (6) angepasst oder abweichend gestaltet ist.

12. Flugzeug nach Anspruch 11, **dadurch gekennzeichnet, dass** in dem Zwischenraum (4) des Flugzeugrumpfs (5) dem Gehäuse (7) der Gepäckablage (2) ein Abdeckungselement (24) zugeordnet ist, das sich in der geschlossenen Position der Gepäckablage (2) zumindest über den Bereich der Zugangsöffnung (10) erstreckt.

## Claims

1. Device for accommodating luggage, which forms a hatrack (2) and comprises holding means, wherein the hatrack (2) as a luggage accommodation space comprises a housing (7) with an access opening (10) and which housing is pivotable from a tilted transport position, which closes the hatrack, into an open, largely horizontal loading position, and the housing (7) comprising a rotation axle (9) close to the centre of gravity and arranged in a base (11), wherein the rotation axle (9) is connectable at both end faces (12a, 12b) of the housing (7) to a structure (20), fixed to the aircraft, in the region of an aircraft fuselage (5) via the holding means, wherein a system support carrier is provided as the holding means for the housing (7) of the hatrack (2), said system support carrier consisting of an outer frame (8) comprising two mutually offset brackets (14a, 14b), which are configured U-shaped, are joined together via a receiver (13) at least at the two end faces (12a, 12b) of the housing (7) to form a constructional unit, and form a pivot bearing together with the rotation axis (9) of the housing (7).

2. Device according to claim 1, **characterized in that** the housing (7) of the hatrack (2), which housing is configured as a single piece and which has a semicircular cross-sectional profile forms a luggage accommodation space which is closed with the exception of the access opening (10).

3. Device according to claim 1 or 2, **characterized in that** the housing (7) of the hatrack (2), starting from the open horizontal position, is pivotable into a vertical position, wherein the luggage is being displaced via a portion of the base (11), forming a chute, into a region of the housing (7) opposite the access opening (10).

4. Device according to one of the preceding claims, **characterized in that** each bracket (14a, 14b) of the outer frame (8) is releasably connectable to the structure (20), which is fixed to the aircraft, in the region of the aircraft fuselage (5) via a form-fit and/or non-positive snap-in connection.

5. Device according to one of the claims 1 to 4, **characterized in that** to form the rotation axle (9) a metal tube or a high-strength plastics material tube is assigned to the base (11) of the housing (7) close to the centre of gravity as a longitudinal support.

6. Device according to one of the claims 1 to 5, **characterized in that** at least the housing (7) of the hatrack (2) is made of a composite material, in particular of GFRP, glass-fibre-reinforced plastics material, or CFRP, carbon-fibre-reinforced plastics material, and the construction of the base (11) of the housing (7) comprises individual cover layers of a composite material, between which a honeycomb core is provided.

7. Device according to one of the claims 1 to 6, **characterized in that** in the closed position of the hatrack (2) the position of the housing (7) is secured with at least one externally controlled or automatically operating latch (15), which can be operated by a release (17) arranged on the base side of the housing (7).

8. Device according to one of the claims 1 to 7, **characterized in that** a rail system, is to be arranged in the structure (20), fixed to the aircraft, of the aircraft fuselage (5), via which rail system the hatrack (2) is slideably guided and via which the hatrack can individually be fixed with respect to a row of passenger seats.

9. Device according to one of the claims 1 to 8, which is equipped with a power assistance to assist in an opening and/or a closing process.

10. Aircraft comprising a device according to one of the claims 1 to 9.

11. Aircraft according to claim 10, **characterized in that** in the closed position the hatrack (2) is fully integrated into a gap (4) in the aircraft fuselage (5) and visually integrated into a cabin lining (6) of the passenger cabin (1), wherein a base region (21) of the housing (7) fully compensates for a cut-out (22) in the cabin lining (6), which cut-out is intended for the hatrack (2), and wherein the base region (21) is adapted to the shaping and/or colouring of the cabin lining (6), or being of a deviating configuration, when the hatrack (2) is closed.

12. Aircraft according to claim 11, **characterized in that** in the gap (4) of the aircraft fuselage (5) a cover element (24), which extends at least over the region of the access opening (10) in the closed position of the hatrack (2), is assigned to the housing (7) of the hatrack (2).

## Revendications

1. Dispositif de réception de bagages, qui forme un rangement à bagages (2) et comporte des moyens de retenue, le rangement à bagages (2) en guise d'espace de réception de bagages comprenant un boîtier (7) doté d'une ouverture d'accès (10), qui, est pivotable d'une position de transport basculée, fermant le rangement à bagages à une position de chargement ouverte, essentiellement horizontale, et le boîtier (7) comportant un axe de rotation (9) à proximité du centre de gravité est disposé dans un fond (11), **caractérisé en ce que**, sur les deux côtés frontaux (12a, 12b) du boîtier (7), l'axe de rotation (9) peut être relié par le biais du moyen de retenue à une structure (20) fixée à demeure sur un avion dans la zone d'un fuselage d'avion (5) ;
un support de système étant prévu en guise de moyen de retenue pour le boîtier (7) du rangement à bagages (2), constitué d'un cadre extérieur (8), qui comprend deux étriers (14a, 14b) en forme de U décalés l'un par rapport à l'autre, qui sont réunis au moins sur les deux côtés frontaux (12a, 12b) du boîtier (7) par le biais d'un logement (13) pour former une unité modulaire, et qui forment, conjointement avec l'axe de rotation (9) du boîtier (7), un pivot.

2. Dispositif selon la revendication 1, **caractérisé en ce que** le boîtier (7) du rangement à bagages (2), formé d'un seul tenant et présentant un profil de section transversale demi-circulaire, forme un espace de réception de bagages fermé à l'exception de l'ouverture d'accès (10).

3. Dispositif selon l'une des revendications 1 ou 2, **caractérisé en ce que** le boîtier (7) du rangement à bagages (2) peut être pivoté à partir de la position ouverte horizontale dans une position verticale, les bagages se déplaçant dans une zone du boîtier (7) opposée à l'ouverture d'accès (10) par le biais d'une partie du fond (11) formant une glissière.

4. Dispositif selon l'une des revendications précédentes, **caractérisé en ce que** chaque étrier (14a, 14b) du cadre extérieur (8) peut être relié de manière amovible à la structure (20) fixée à demeure sur l'avion dans la zone du fuselage d'avion (5) par le biais d'une liaison serrage par encliquetage et/ou par adhérence.

5. Dispositif selon l'une des revendications 1 à 4, **caractérisé en ce qu'**un tube métallique ou un tube en matière plastique à résistance élevée est associé au fond (11) du boîtier (7) à proximité du centre de gravité en guise de longeron pour former l'axe de rotation (9).

6. Dispositif selon l'une des revendications 1 à 5, **caractérisé en ce qu'**au moins le boîtier (7) du rangement à bagages (2) est fabriqué en matériau composite, en particulier en PRV - polymère renforcé de fibre de verre - ou PRFC - polymère renforcé de fibre de carbone - et la construction du fond (11) du boîtier (7) comprend des couches superficielles individuelles en matériau composite, entre lesquelles est introduite une âme en nid d'abeilles.

7. Dispositif selon l'une des revendications 1 à 6, **caractérisé en ce que**, dans la position fermée du rangement à bagages (2), la position du boîtier (7) est fixée au moyen d'au moins un verrou d'enclenchement (15) commandé à distance ou agissant de manière automatique, qui peut être actionné au moyen d'un déverrouillage (17) disposé côté fond du boîtier (7).

8. Dispositif selon l'une des revendications 1 à 7, **caractérisé en ce que**, dans la structure (20) fixée à demeure sur l'avion du fuselage d'avion (5), un système de rail est à prévoir, permettant de guider le rangement à bagages (2) de manière coulissante et de le fixer individuellement par rapport à une rangée de sièges passagers.

9. Dispositif selon l'une des revendications 1 à 8, qui est équipé d'une assistance de force afin de soutenir un procédé d'ouverture et/ou de fermeture.

10. Avion comprenant un dispositif selon l'une des revendications 1 à 9.

11. Avion selon la revendication 10, **caractérisé en ce que** le rangement à bagages (2) dans la position fermée est intégré entièrement dans un espace intermédiaire (4) du fuselage d'avion (5) et est intégré du point de vue optique dans un habillage de cabine (6) de la cabine passagers (1), une zone de fond (21) du boîtier (7) compensant entièrement une découpe (22) dans l'habillage de cabine (6) prévue pour le rangement à bagages (2) et la zone de fond (21) étant configurée adaptée à une forme et/ou une couleur de l'habillage de cabine (6) ou différente de celles-ci lorsque le rangement à bagages (2) est fermé.

12. Avion selon la revendication 11, **caractérisé en ce que** dans l'espace intermédiaire (4) du fuselage d'avion (5), un élément de recouvrement (24) est associé au boîtier (7) du rangement à bagages (2), qui s'étend au moins sur la zone de l'ouverture d'accès (10) dans la position fermée du rangement à bagages (2).
